# EUROPEAN PATENT APPLICATION

(11) **EP 4 173 685 A1**
(43) Date of publication of application: **03.05.2023**
(21) Application number: 21216957.7
(22) Date of filing: 22.12.2021
(51) Int. Cl.: A63F 13/65, A63F 13/73, A63F 13/79, A63F 13/34, A63F 13/69

(54) **METHOD AND APPARATUS FOR ESTABLISHING ASSOCIATION BETWEEN VIRTUAL AND REAL VEHICLES IN BLOCKCHAIN NETWORK**

(30) Priority: 29.10.2021 CN 202111268893
(71) Applicant: Zhiji Automotive Technology Co., Ltd., Shanghai 200131 (CN)
(72) Inventor: CHEN, Yanyu, Shanghai, 200131 (CN); QIAN, Gang, Shanghai, 200131 (CN)
(74) Representative: dompatent von Kreisler Selting Werner - Partnerschaft von Patent- und Rechtsanwälten mbB

(57) **Abstract**

The present disclosure provides a method for establishing an association between a virtual vehicle and a real vehicle in a blockchain network. The method includes receiving a code of the virtual vehicle in the blockchain network and an identification code of the real vehicle; verifying whether the code of the virtual vehicle is associated with the identification code of the real vehicle by calling a smart contract; in response to that the association is successful, recording the association in an association table; receiving driving data uplinked to the blockchain network by the real vehicle; and determining a value reward based on a blockchain network gain of the associated virtual vehicle and the driving data of the real vehicle.

## Description

### TECHNICAL FIELD

The present disclosure relates to the technical field of blockchain, and more particularly relates to a method and an apparatus for establishing an association between virtual and real vehicles in a blockchain network.

### BACKGROUND

Blockchain 3.0 technology includes Non-fungible Token (NFT) technology, in which NFT is a unique and inseparable token. The features of NFT provide a way to mark the ownership of digital assets, and can also anchor goods in the real world. At present, NFT is still in the early stage of development, and its application fields mainly concentrates in niche markets such as art, collectibles, games etc., and there are still a wider range of potential fields to be explored, such as intellectual property rights, physical assets, digital identity, event ticketing, finance and so on.

The emergence of smart cars has caused the traditional automotive industry to undergo a transformation from a manufacturing industry centered on design and production to a service industry centered on mobile travel. Blockchain technology has many application-scenarios in the smart car space that can help provide smarter, more efficient and secure services. However, there are still few applications of blockchain in the automotive field, and most of them are limited to the production end and the sales end, and a complete ecosystem has not yet been formed. Moreover, the automotive field is still an isolated island today, which is cut off from other fields such as entertainment, finance and consumerism.

Cars cannot be limited to travel tools, but can be used as carriers of travel, entertainment and consumption, generating massive data, and using blockchain technology to realize data assetization and information and value transmission.

### SUMMARY

A brief outline of the present disclosure will be given below to provide basic understanding of some aspects of the present disclosure. However, it should be understood that the outline is not an exhaustive one of the present disclosure. It intends neither to determine the key part or important part of the present disclosure, nor to define the scope of the present disclosure. The purpose is only to give some concepts about the present disclosure in a simplified form, as a preface of the subsequent detailed descriptions.

According to a first aspect of the present disclosure, a method for establishing an association between a virtual vehicle and a real vehicle in a blockchain network is provided, which includes: selecting a virtual vehicle; selecting a real vehicle to be associated with the virtual vehicle; associating a code of the virtual vehicle in the blockchain network with an identification code of the real vehicle by calling a smart contract; and receiving feedback on whether the association is successful from the blockchain network; wherein the virtual vehicle corresponds to a non-fungible token in the blockchain network.

According to a second aspect of the present disclosure, an apparatus for establishing an association between a virtual vehicle and a real vehicle in a blockchain network is provided, which includes: a processing module configured to: select a virtual vehicle; select a real vehicle to be associated with the virtual vehicle; a calling module configured to associate a code of the virtual vehicle in the blockchain network with an identification code of the real vehicle by calling a smart contract; and a receiving module configured to receive feedback on whether the association is successful from the blockchain network; wherein the virtual vehicle corresponds to a non-fungible token in the blockchain network.

According to a third aspect of the present disclosure, a real vehicle is provided, which includes: a sensor configured to acquire driving data of the real vehicle; and an association module configured to interact with the apparatus according to the second aspect of the present disclosure to establish a connection between a virtual vehicle in a gaming system and the real vehicle.

According to a fourth aspect of the present disclosure, a real vehicle node apparatus in a blockchain network is provided, which includes: a sensor configured to acquire driving data of a real vehicle; and the apparatus according to the second aspect of the present disclosure.

According to a fifth aspect of the present disclosure, a blockchain network is provided, which includes: the real vehicle node apparatus according to the fourth aspect of the present disclosure.

According to a sixth aspect of the present disclosure, a non-transitory computer-readable storage medium having stored thereon a program that, when being executed by a computer, causes the computer to execute the method according to the first aspect of the present disclosure is provided.

According to a seventh aspect of the present disclosure, an apparatus for establishing an association between a virtual vehicle and a real vehicle in a blockchain network is provided, which includes a memory and a processor, the memory being in communication coupling with the processor, the memory having stored therein a program that, when being executed by the processor, causes the processor to execute the method according to the first aspect of the present disclosure.

According to an eighth aspect of the present disclosure, a computer program product is provided, which includes a computer program that, when being executed by a processor, implements the method according to the first aspect of the present disclosure.

The method and the apparatus provided by the present invention can establish an association between a virtual vehicle and a real vehicle, break the isolation between virtual and reality, expand the application scene of the NFT, and enable the value transfer of digital assets and the free economy of users.

Other features and advantages of the embodiments of the present disclosure will become apparent from the following detailed description of the present disclosure with reference to the accompanying drawings.

### BRIEF DESCRIPTION OF THE DRAWINGS

The accompanying drawings which form a part of the description illustrate embodiments of the present disclosure and together with the description serve to explain the principles of the present disclosure.

The present disclosure may be more clearly understood from the following detailed description with reference to the accompanying drawings, in which:
Fig. 1 illustrates a schematic diagram illustrating an association between a virtual vehicle and a real vehicle according to an embodiment of the present disclosure;
Fig. 2 illustrates an overall architecture diagram for implementing the association between the virtual vehicle and the real vehicle according to an embodiment of the present disclosure;
Fig. 3 illustrates a schematic diagram of a method for implementing an association between a virtual vehicle with a real vehicle and obtaining a gain between the virtual vehicle and the real vehicle according to an embodiment of the present disclosure;
Fig. 4 illustrates a schematic diagram of a data structure illustrating the association between the virtual vehicle and the real vehicle according to an embodiment of the present disclosure;
Fig. 5 is a data structure illustrating a dependency relationship between the virtual vehicle and props and outfits according to an embodiment of the present disclosure;
Fig. 6 is a data structure of driving data of the real vehicle according to an embodiment of the present disclosure;
Fig. 7 is a flowchart of a method for implementing an association between a virtual vehicle and a real vehicle according to an embodiment of the present disclosure;
Fig. 8 is a block diagram of an apparatus for an association between a virtual vehicle and a real vehicle according to an embodiment of the present disclosure; and
Fig. 9 is a schematic diagram of an apparatus for implementing the method according to the present disclosure.

### DESCRIPTION OF THE EMBODIMENTS

The following detailed description is made with reference to the accompanying drawings and is provided to assist in a comprehensive understanding of various example embodiments of the present disclosure. The following description includes various details to aid in understanding but these details are considered by way of example only and are not intended to limit the disclosure which is defined by the appended claims and their equivalents. The items and phrases used in the following description are only used to enable a clear and consistent understanding of the present disclosure. In addition, for the sake of clarity and conciseness, a description of well-known structures, functions and configurations may be omitted. Those of ordinary skill in the art will recognize that various changes and modifications may be made to the examples described herein without departing from the scope of the present disclosure.

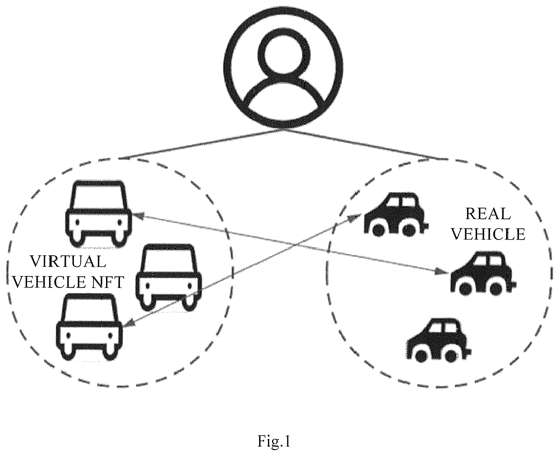

Fig. 1 is a schematic diagram illustrating an association between a virtual vehicle and a real vehicle according to an embodiment of the present disclosure. As shown in Fig. 1, one user may own real vehicles and virtual vehicle. Real vehicles are vehicles owned by users in real life; virtual vehicles are non-real-life vehicles owned by the same user, which may be game vehicles in the gaming system and have corresponding NFTs in the blockchain network. Users may own multiple real vehicles and multiple virtual vehicles, and may establish a mapping relationship between the virtual vehicles and the real vehicles. This mapping relationship may not be fixed, but may be defined and modified by the users themselves. In the embodiments according to the present disclosure, such a mapping relationship may be one-to-one, i.e., one real vehicle may be associated with one virtual vehicle. In the embodiments according to the present disclosure, such a mapping relationship may also be one-to-more, e.g., one real vehicle may be associated with a plurality of virtual vehicles.

Specifically, real vehicles will generate a large amount of driving data during driving. These driving data can be fully utilized based on the blockchain technology, and corresponding value rewards can be generated in the blockchain network accordingly. In the embodiments according to the present disclosure, a reward point can also be preset at a place in the real world, and when the real vehicle arrives at the reward point, it has the opportunity to obtain the corresponding value reward in the blockchain network. Reward points may be set randomly or set for specific purposes (for example, there is a need to collect data associated with a particular site).

In the embodiments according to the present disclosure, materials may be obtained from the gaming system. Specifically, the material may be a basic element in the gaming system, such as copper block, iron block, rubber, etc. In the embodiments according to the present disclosure, the material may be preset in the gaming system. For example, the material may be buried in a predetermined location in the gaming system where the virtual vehicle has an opportunity to obtain the material if it reaches the predetermined location in the gaming system. The material may be used to synthesize props such as tires, engines, rear wings, etc. of virtual vehicles in the garage in the blockchain system and/or in the gaming system.

In the embodiment according to the present disclosure, it is also possible to synthesize the outfits with props in the gaming system. The outfit may be a set of props corresponding to one virtual vehicle. For example, one virtual vehicle may be equipped with four tires, one rear wing and one engine, these props together form an outfit. The mode of synthesizing the outfit may be preset, for example, according to the number of slots of the virtual vehicle.

In the embodiments according to the present disclosure, props, outfits, etc. in the gaming system may also have corresponding NFTs in the blockchain network. In the embodiments according to the present disclosure, a combination of props (i.e., props synthesizing the outfit), a combination of props and virtual vehicles (i.e., props being equipped to vehicles), a combination of combined props and vehicles (i.e., outfits being equipped to vehicles), etc. may generate corresponding NFTs in the blockchain network.

In the embodiments according to the present disclosure, equipping the props and outfits to the virtual vehicle may enhance the specific capabilities of the virtual vehicle in the gaming system, i.e., the props and outfits may bring corresponding gaming system gains to the virtual vehicle.

In the embodiments according to the present disclosure, the gain of the virtual vehicle may be mapped to the real vehicle corresponding to the virtual vehicle, that is, the props and outfits may bring the corresponding blockchain network gain to the real vehicle corresponding to the virtual vehicle, and the blockchain network gain is applied to the value reward obtained in the blockchain network based on the real vehicle driving data corresponding to the virtual vehicle. For example, after being equipped with the props and outfits, the ability of virtual vehicles in the gaming system can be improved; further, the virtual vehicle can correspondingly have the blockchain network gain, and the value reward obtained by the real vehicle associated with the virtual vehicle in the blockchain network or the probability of obtaining the value reward in the blockchain network can be correspondingly improved based on the blockchain network gain.

Additionally, in the embodiments according to the present disclosure, the gain of a real vehicle may also be mapped to a virtual vehicle corresponding to the real vehicle. For example, for a real vehicle that generates driving data with high value or reaches a reward point in the real world, there may be a gaming system gain accordingly, and the capability of a virtual vehicle associated with the real vehicle in the gaming system may be improved accordingly based on the gaming system gain.

Furthermore, in the embodiments according to the present disclosure, the props and outfits may have a "service life" and their values are subject to a depreciation method, thereby controlling the circulation and rarity of the props and outfits. Moreover, users can rent, sell, auction or exchange NFTs (props, outfits, virtual vehicles, or other goods such as skins, stickers, etc.) on the decentralized trading market platform. With the help of contracts and tokenization protocol, the creators of each element can make profits separately without an intermediary, thus realizing "user free economy".

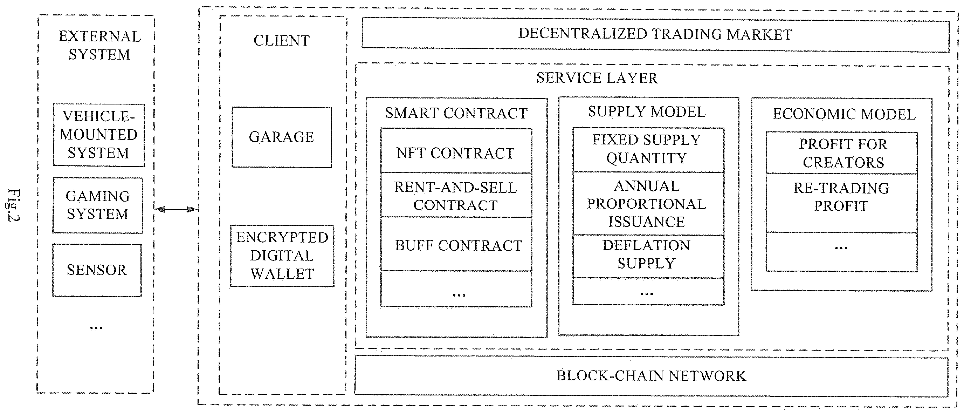

Fig. 2 illustrates an overall architecture diagram for implementing the association between the virtual vehicle and the real vehicle according to an embodiment of the present disclosure. Fig. 2 illustrates a system where the present disclosure may be implemented. The system may include an external system communicated with a user end and a decentralized trading market. The external system may include a vehicle mounted system, a gaming system and sensing system. The vehicle mounted system is a system in a real vehicle.

The client end may include a garage and encrypted digital wallets. As shown in Fig. 2, the client can include tools for users to hold and manage cryptocurrency (i.e., value rewards mentioned above) and digital assets (i.e., NFTs of virtual vehicles, props, outfits, etc. mentioned above, and other goods such as skins, stickers, etc.), that is, encrypted digital wallets and garages. The main functions of encrypted digital wallet can include cryptocurrency-related transfer, checking balance, checking transaction details and so on. The main functions of the garage can include: displaying digital assets held by users; collecting and storing materials; casting props; synthesizing outfits; and equipping, modifying, recycling, dismantling, reconstructing virtual vehicles and other functions.

Garages and wallets may be integrated in the decentralized trading market to make it easy for the users to buy, sell, exchange and issue digital assets. Fig. 2 further illustrates service layer associated with the decentralized trading market. For example, the service layer may include various contracts, supply models, and economic models. The users may make the props and outfits they hold into NFTs through the decentralized trading market, and choose the preset supply model of the system (e.g., fixed supply quantity, annual proportional issuance, annual quantity issuance, deflation supply, etc.) or custom supply model. The market also supports the users to upload their own virtual vehicle models, skins, stickers, etc., and make them into NFTs. The users may publish NFTs to the market for auction, sale or lease. The NFTs according to the present disclosure is further described below. The ERC standards described below are the open standards.
1. NFT made of virtual vehicles (bare vehicles), props and other independent creative props may refer to ERC-721 standard, where digital assets are tokenized and their ownerships are identified.
2. NFT made of multiple props synthesized outfit combination production may refer to ERC-1155 standard, where a plurality of ERC-721 tokens can be made into a token bundle, which can be circulated in a form of a single outfit NFT entirety;
3. The NFT of virtual vehicle (bare vehicles) can be equipped with NFTs of props, outfits, stickers or skins, and these whole parts can be made into one NFT, the production process may refer to ERC-998 standard. This process actually makes a new NFT with the NFT of the virtual vehicle as a parent token and other NFTs as child tokens, and retains its hierarchy and dependency relationship.

An account address of the NFT creator is part of the token metadata and cannot be modified. In this way, an economic model that is free for users can be established. That is, the creator of each NFT (i.e., the user who generated each NFT) can directly profit from renting and selling, auctioning, re-renting and selling, etc. without an intermediary. In the embodiments according to the present disclosure, a percentage that the creator can profit from each NFT transaction may be set in the rental and sale contract in a smart contract, for example, the percentage may be set to 30%. The following are several example transaction scenarios:
1. The creator directly rents and sells the NFT separately: the creator's profit = transaction profit ^{∗} 100%;
2. The creator directly rents and sells the NFT containing the creator's NFT: the creator's profit = (a value of the creator's NFT/a total value of the NFT containing the creator's NFT) ^{∗} the transaction profit ^{∗} 100%;
3. The possessor but not the creator rents and sells the NFT alone: the creator's profit = transaction profit ^{∗} 30%;
4. The possessor but not the creator directly rents and sells the NFT containing the creator's NFT: the creator's profile = (the value of the creator's NFT/the total value of the NFT containing the creator's NFT) ^{∗} the transaction profile ^{∗} 30%.

As shown in Fig. 2, the service layer may include various contracts. For example, smart contracts according to the embodiments of the present disclosure may include an NFT contract, a rent-and-sell contract and a Buff contract.

Specifically, the Buff contract can be used to establish an association between real vehicles and virtual vehicles in the blockchain network, and ensure the automatic and accurate execution of Buff rules. Each virtual vehicle has an NFT code to ensure its uniqueness in the blockchain network; Each real vehicle has an identification code to ensure the uniqueness of its identity, which can be a VIN (Vehicle Identification Number) of the vehicle, a blockchain account address of the vehicle, a MAC address (Media Access Control Address) of the vehicle, etc. Under this premise, the Buff contract can include the following basic interfaces:
1. bind (nft_code, vehicle_code, other_params []): calling this interface can make virtual vehicles and real vehicles associated in the blockchain network, wherein nft_code is the NFT code of virtual vehicles to be associated, vehicle code is the identification code of real vehicles to be associated, and other_params [] is other related parameters;
2. unbind (nft code, vehicle_code, other_params []): calling this interface can disassociate the NFT of the associated virtual vehicle and the real vehicle in the blockchain network, wherein nft_code is the NFT code of the virtual vehicle to be disassociated, vehicle_code is the identification code of the real vehicle to be disassociated, and other_params [] is other related parameters;
3. get (nft_code): calling this interface can acquire relevant information of NFT of the virtual vehicle, including basic information of NFT of the virtual vehicle, props and outfits information of the virtual vehicle equipment, the gain associated with the virtual vehicle, etc., wherein nft_code is the NFT code of the virtual vehicle whose information needs to be obtained;
4. get (vehicle_code): calling this interface can acquire the relevant information of the real vehicle, including the basic information of the real vehicle, the gain associated with the real vehicle, etc., where vehicle code is the identification code of the real vehicle whose information needs to be obtained.

The external system may be directly connected to the blockchain network, or may be connected to the blockchain network through SDK (Software Development Kit), API (Application Programming Interface), etc. provided by the decentralized trading market, and may also interact with the blockchain system by calling the API or integrated SDK exposed by the client wallet and garage. For example, the process of collecting materials in the garage may include calling the garage API to upload the information after the vehicle-mounted system or sensor obtains the vehicle driving data and the gaming system obtains the player's game data, or may include directly uplinking the vehicle driving data and/or game data to the blockchain system. The garage may monitor the changes of associated accounts and obtain data from the blockchain system. Virtual vehicles may obtain Buff after being equipped with the props, which requires the vehicle-mounted system or gaming system to integrate SDK to obtain the value of Buff; or uplink the value to the blockchain system, so that the external system can obtain data from the blockchain network.

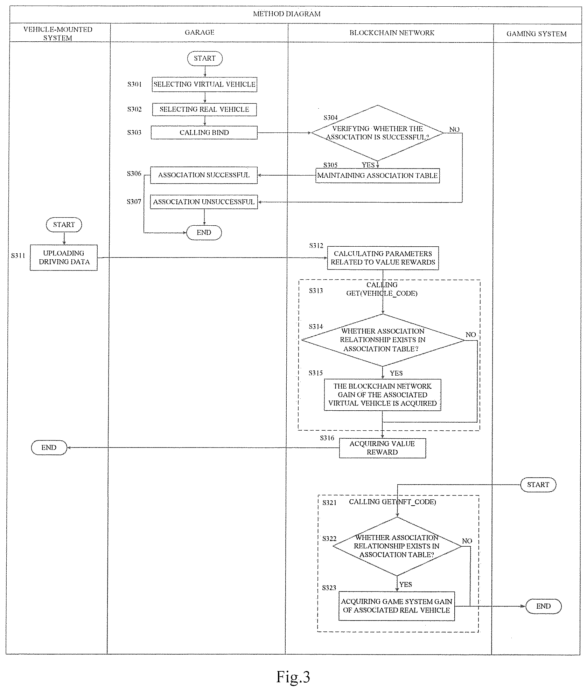

Fig. 3 illustrates a schematic diagram of a method for implementing an association between a virtual vehicle with a real vehicle and obtaining a gain between the virtual vehicle and the real vehicle according to an embodiment of the present disclosure. Fig. 3 illustrates that the method may be implemented through the interactions/communication among a vehicle-mounted system, a garage, a blockchain network and a gaming system.

As shown in Fig. 3, at S301, the user may select a virtual vehicle to be associated in the garage. At S302, the user may select a real vehicle to be associated with the virtual vehicle in the garage. For example, a user may input an identification code of the real vehicle. At S303, bind (nft_code, vehicle_code, other_params []) in the smart contract may be called to associate the virtual vehicle with the real vehicle, wherein the inputted nft code is the NFT code of the virtual vehicle and the vehicle_code is the identification code of the real vehicle. At S304, the blockchain network verifies whether the association is successful. If it is verified that the association is successful, the association table is maintained in the blockchain network at S305, that is, the association established between the virtual vehicle and the real vehicle is recorded in the association table. Next, at S306, the user receives a feedback that is the association being successful, and the process ends. If it is verified that the association is unsuccessful, the user receives a feedback is the association being unsuccessful, at S307. The steps of S301 to S303 and S306 to S307 may be implemented in any appropriate electronic devices. For example, the electronic device may be an electronic device at the client end. The steps of S304 to S305 may be implemented by a blockchain network.

As shown in Fig. 3, when driving a real vehicle in the real world, at S311, the vehicle-mounted system can uplink the driving data to the blockchain network. In particular, the driving data may include data collected during actual driving of the vehicle including but not limited to data acquired by sensors associated with the actual vehicle. At S312, the blockchain network may calculate parameters related to value rewards (e.g., calculation based on the driving data received from the vehicle-mounted system). Specifically, the parameter may include but is not limited to, the probability that the real vehicle obtains a value reward, etc. At S313, the blockchain network may call get (vehicle_code) in the smart contract to obtain information related to the real vehicle. In some embodiments, step S313 may include steps S314 and S315. At step S314, the blockchain network judges whether an association relationship exists in the association table. If the association relationship exists, the blockchain network gain of the associated virtual vehicle is acquired at S315. The blockchain network gain of the associated virtual vehicle may be applied to the probability of obtaining a value reward (e.g., combined with the probability of obtaining the value reward to determine the probability of obtaining a value in combination with other related parameters). At S316, a process of acquiring/determining a value reward may be performed based on the parameters related to the value reward calculated at S312 and the blockchain network gain of the associated virtual vehicle acquired at S315. As a non-limiting example, if the probability of obtaining a value reward calculated based on the driving data at S312 is 0.2, and the probability of obtaining the blockchain network gain of the associated virtual vehicle at S315 is 0.2, the probability of obtaining a value reward at S316 is the sum of the two values, that is, 0.4. The above values are only non-limiting examples, and the manner in which the blockchain network gain of the associated virtual vehicle acquired at S315 is applied to the value reward related parameters calculated at S312 is not limited to addition of the two probability, for example, the blockchain network gain may also be used as a scaling factor. In some embodiments, the steps of S312 to S316 may be implemented by a blockchain network.

As shown in Fig. 3, when a game with a virtual vehicle in the gaming system is being played, the backchain network may receive the information that the game is playing. At S321, the blockchain network may call the get (nft code) in the smart contract to acquire information associated with the virtual vehicle upon detection of the game playing. Specifically, step S321 may include steps S322 and S323. In step S322, it is judged whether an association relationship exists in the association table. If the association relationship exists, a gaming system gain of a real vehicle associated with the virtual vehicle may be acquired at step S323. The gaming system gain of the associated real vehicle may be applied to the capability of the virtual vehicle in the gaming system. If no association relationship exists, the process ends. In some embodiments, the steps of S321 to S323 may be implemented by a blockchain network.

In the present disclosure, the world state of the blockchain records the current state values of all books, which can include the association relationship between virtual vehicles and real vehicles, the dependency relationship between virtual vehicles and props and outfits, and the driving data of real vehicles etc. In order to realize the persistence, fast search and efficient update of the above relationships, the design of world state can adopt key-value database, such as LevelDB, combined with a memory cache mechanism.

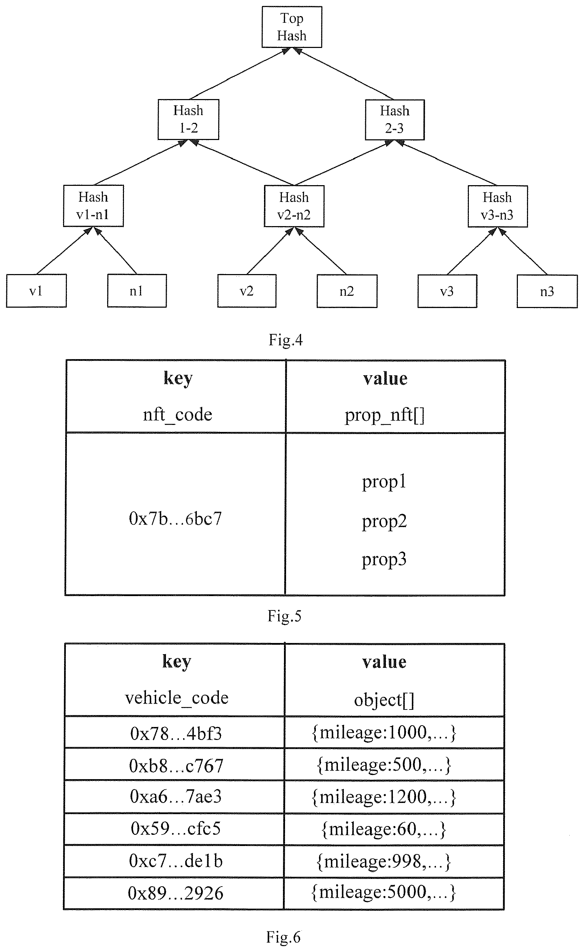

Fig. 4 illustrates a schematic diagram of a data structure illustrating the association between the virtual vehicle and the real vehicle according to an embodiment of the present disclosure. As shown in Fig. 4, the association relationship between the virtual vehicle and the real vehicle may adopt a Merkle Tree data structure, where v represents the identification code vehicle_code of the real vehicle and n represents the code nft_code of the NFT of the virtual vehicle. Hash v-n can be calculated by SHA256 and other hash algorithms by taking a group of association relationships as leaf nodes, respectively. Then the Hash v-n can be paired two-by-two to compute the next layer of hash, this step is repeated until the root hash Top Hash is computed. With such a data structure, it is possible to quickly retrieve an existence of a specific association combination and update the changes of the relationship combination efficiently.

Fig. 5 is a data structure illustrating a dependency relationship between the virtual vehicle and props and outfits according to an embodiment of the present disclosure. As shown in Fig. 5, the data structure of the dependency relationship between the NFT of the virtual vehicle and the NFTs of props and outfits may adopt the structure of Hash List, where "key" is the code nft_code of the NFT of the virtual vehicle, "value" is the NFTs of props and outfits equipped to the virtual vehicle, and "prop" in Fig. 5 represents the NFTs of the props and outfits.

Fig. 6 is a data structure of driving data of the real vehicle according to an embodiment of the present disclosure. In Fig. 6, the "key" may be an identification code of the real vehicle and the "value" may be driving data corresponding to the real vehicle. With the data structure as shown in Fig. 6, real-time driving data of real vehicles can be recorded in the blockchain network, and the real-time driving data can include mileage information and other driving-related data.

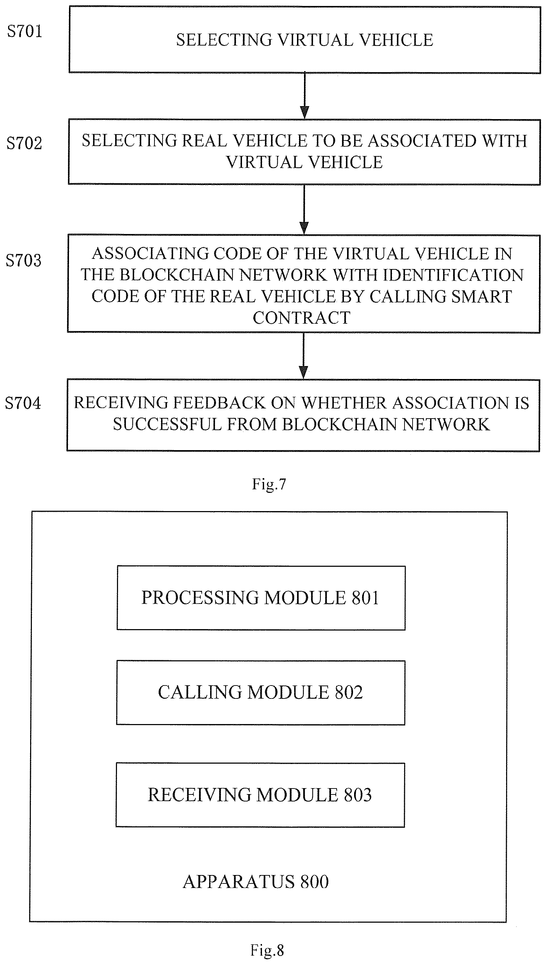

Fig. 7 is a flowchart of a method for implementing an association between a virtual vehicle and a real vehicle according to an embodiment of the present disclosure.

As shown in Fig. 7, at S701, a virtual vehicle to be associated may be selected, and such a selection of the virtual vehicle may be realized by inputting an NFT code of the virtual vehicle in the blockchain network; at S702, a real vehicle to be associated with the virtual vehicle can be selected, and such a selection of the real vehicle can be realized by inputting an identification code of the real vehicle; at S703, the code of the virtual vehicle in the blockchain network is associated with the identification code of the real vehicle by calling a smart contract, which can be the bind (nft_code, vehicle_code, other_params []) mentioned above; and at S704, feedback on whether the association is successful may be received from the blockchain network.

Fig. 8 is a block diagram of an apparatus 800 for an association between a virtual vehicle and a real vehicle according to an embodiment of the present disclosure; and as shown in Fig. 8, the apparatus 800 may include a processing module 801, a calling module 802 and a receiving module 803. The processing module 801 may be configured to select a virtual vehicle and select a real vehicle to be associated with the virtual vehicle; the calling module 802 may be configured to associate a code of the virtual vehicle in the blockchain network with an identification code of the real vehicle by calling a smart contract; and the receiving module 803 may be configured to receive feedback on whether the association is successful from the blockchain network.

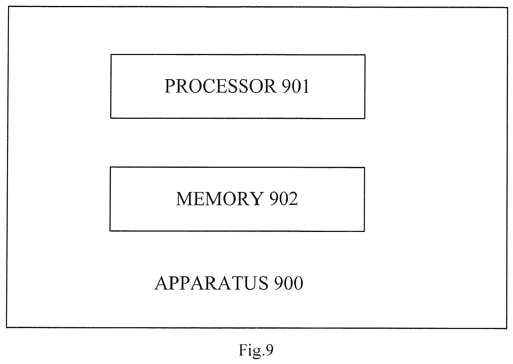

Fig. 9 is a schematic diagram of an apparatus 900 for implementing the method according to the present disclosure. The apparatus 900 may include a processor 901 and a memory 902. The memory 902 may be in communication coupling with the processor 901 having stored therein a program that, when being executed by the processor causes processor 901, executes the method according to the embodiments of the present disclosure. The processor 901 may be any kind of processor and may include but not be limited to one or more general purpose processors or special purpose processors such as special purpose processing chips. The memory 902 may include both volatile and nonvolatile media, removable and non-removable media. For example, the memory 902 may include any combination of Random Access Memory ("RAM"), Dynamic RAM ("DRAM"), Static RAM (" SRAM"), Read-Only Memory ("ROM"), flash memory, cache memory, and/or any other type of non-transitory computer-readable medium.

The following section describes additional aspects and features of the method and system for establishing an association between a virtual vehicle and a real vehicle in a blockchain network, without limitation as a series of paragraphs, some or all of which may be alphanumerically designated for clarity and efficiency. Each of these paragraphs can be combined with one or more other paragraphs, and/or with disclosure from elsewhere in this application, in any suitable manner. Some of the paragraphs below may expressly refer to and further limit other paragraphs, providing without limitation examples of some of the suitable combinations.

A0. A method for establishing an association between a virtual vehicle and a real vehicle in a blockchain network, being implemented in a client end, the method comprising
selecting a virtual vehicle, wherein the virtual vehicle corresponds to a non-fungible token in the blockchain network;
selecting a real vehicle to be associated with the virtual vehicle;
associating a code of the virtual vehicle in the blockchain network with an identification code of the real vehicle by calling a smart contract;
receiving feedback on whether the association is successful from the blockchain network;
in response to a feedback that the association is successful, uplinking driving data of the real vehicle to the blockchain network to participate in a calculation on a value reward in the blockchain as relevant parameter; and
acquiring the value reward issued by the blockchain.

B0. A method for establishing an association between a virtual vehicle and a real vehicle in a blockchain network, being implemented in an electronic device of a blockchain, the method comprising:
receiving a code of the virtual vehicle in the blockchain network and an identification code of the real vehicle;
verifying whether the code of the virtual vehicle is associated with the identification code of the real vehicle by calling a smart contract;
in response to that the association is successful, recording the association in an association table;
   receiving driving data uplinked to the blockchain network by the real vehicle; and
   determining a value reward based on a blockchain network gain of the associated virtual vehicle and the driving data of the real vehicle.

C0. A method for establishing an association between a virtual vehicle and a real vehicle in a blockchain network comprising:
selecting a virtual vehicle;
selecting a real vehicle to be associated with the virtual vehicle;
associating a code of the virtual vehicle in the blockchain network with an identification code of the real vehicle by calling a smart contract; and
receiving feedback on whether the association is successful from the blockchain network;
wherein the virtual vehicle corresponds to a non-fungible token in the blockchain network.

C1. The method according to paragraph C0, wherein the feedback on whether the association is successful is based on a verification performed in the blockchain network; and the association in an association table in the blockchain network the blockchain network is recorded in the blockchain in response to that the verification on the association is successful.

C2. The method according to paragraph C0, wherein the real vehicle is configured to uplink driving data of the real vehicle to the blockchain network; and the driving data of the real vehicle is available for acquiring a corresponding value reward in the blockchain network.

C3. The method of paragraph C2, wherein when acquiring the corresponding value reward, the blockchain network is configured to: judge whether a virtual vehicle associated with the real vehicle exists based on an association table in the blockchain network by calling a smart contract; and acquire a blockchain network gain of the associated virtual vehicle if the associated virtual vehicle exists, and cause the blockchain network gain of the associated virtual vehicle to be applied to a probability of acquiring a value reward.

C4. The method according to paragraph C0, wherein the virtual vehicle is configured to play a game in a gaming system and obtain props in the game; and the props correspond to non-fungible tokens in the blockchain network.

C5. The method according to paragraph C4, wherein when playing the game in the gaming system, the blockchain network is configured to: judge whether a real vehicle associated with the virtual vehicle exists based on association table in the blockchain network by calling a smart contract; and acquire a gaming system gain of the associated real vehicle if the associated real vehicle exists, and cause the gaming system gain of the associated real vehicle to be applied to a capability of the virtual vehicle in the gaming system.

C6. The method according to paragraph C4, wherein the props are combinable with each other and with a virtual vehicle; and a mutual combination of the props and a combination of the props with the virtual vehicle generate non-fungible tokens corresponding to the mutual combination of the props and non-fungible tokens corresponding to the combination of the props with the virtual vehicle in the blockchain network.

C7. The method according to paragraph C4, wherein the props correspond to the gaming system gain in the gaming system; and after the prop is combined with the virtual vehicle, the gaming system gain of the props enhances a capability of the virtual vehicle in the gaming system.

C8. The method according to paragraph C6, wherein the props correspond to the blockchain network gain in the blockchain network; and after the prop is combined with the virtual vehicle, the blockchain network gain of the props enhances the blockchain network gain of the virtual vehicle.

C9. The method according to paragraph C6, wherein a combination relationship between the props and the virtual vehicle is recorded in the blockchain in a form of Hash List.

C10. The method according to paragraph C6, wherein the association between the virtual vehicle and the real vehicle is recorded in the blockchain in a form of Merkle Tree.

C11. The method according to paragraph C6, wherein account information associated with the non-fungible tokens is saved in the non-fungible tokens; and the non-fungible tokens are tradable, and proceeds from transactions are distributed among interested parties based on the account information.

D0. An apparatus for establishing an association between a virtual vehicle and a real vehicle in a blockchain network, the apparatus comprising:
a processing module configured to:
select a virtual vehicle; and
select a real vehicle to be associated with the virtual vehicle;
a calling module configured to associate a code of the virtual vehicle in the blockchain network with an identification code of the real vehicle by calling a smart contract; and
a receiving module configured to receive feedback on whether the association is successful from the blockchain network;
wherein the virtual vehicle corresponds to a non-fungible token in the blockchain network.

D1. The apparatus according to paragraph D0, wherein the feedback on whether the association is successful is based on a verification performed in the blockchain network; and the blockchain network is configured to record the association in an association table in the blockchain network if the association is successful.

D2. The apparatus of paragraph D0, wherein the real vehicle is configured to uplink driving data of the real vehicle to the blockchain network; and the driving data of the real vehicle is available for acquiring a corresponding value reward in the blockchain network.

D3. The apparatus of paragraph D2, wherein when acquiring the corresponding value reward, the blockchain network is configured to: judge whether a virtual vehicle associated with the real vehicle exists based on association table in the blockchain network by calling a smart contract; and acquire a blockchain network gain of the associated virtual vehicle if the associated virtual vehicle exists, and cause the blockchain network gain of the associated virtual vehicle to be applied to a probability of acquiring a value reward.

D4. The apparatus of paragraph D0, wherein the virtual vehicle is configured to play a game in a gaming system and obtain props in the game; and the props correspond to non-fungible tokens in the blockchain network.

D5. The apparatus of paragraph D4, wherein when playing the game in the gaming system, the blockchain network is configured to: judge whether a real vehicle associated with the virtual vehicle exists based on association table in the blockchain network by calling a smart contract; and acquire a gaming system gain of the associated real vehicle if the associated real vehicle exists, and cause the gaming system gain of the associated real vehicle to be applied to a capability of the virtual vehicle in the gaming system.

D6. The apparatus of paragraph D4, wherein the props are combinable with each other and with a virtual vehicle; and a mutual combination of the props and a combination of the props with the virtual vehicle generate non-fungible tokens corresponding to the mutual combination of the props and non-fungible tokens corresponding to the combination of the props with the virtual vehicle in the blockchain network.

D7. The apparatus of paragraph D6, wherein the props correspond to the gaming system gain in the gaming system; and
after the prop is combined with the virtual vehicle, the gaming system gain of the props enhances a capability of the virtual vehicle in the gaming system.

D8. The apparatus of paragraph D6, wherein the props correspond to the blockchain network gain in the blockchain network; and
after the prop is combined with the virtual vehicle, the blockchain network gain of the props enhances the blockchain network gain of the virtual vehicle.

D9. The apparatus of paragraph D8, wherein a combination relationship between the props and the virtual vehicle is recorded in the blockchain in a form of Hash List.

D10. The apparatus of paragraph D0, wherein the association between the virtual vehicle and the real vehicle is recorded in the blockchain in a form of Merkle Tree.

D11. The apparatus of any one of paragraphs D0 to D10, wherein account information associated with the non-fungible tokens is saved in the non-fungible tokens; and the non-fungible tokens are tradable, and proceeds from transactions are distributed among interested parties based on the account information.

E0. Areal vehicle comprising: a sensor configured to acquire driving data of the real vehicle; and an association module configured to interact with the apparatus of any one of paragraphs D0 to D10 to establish a connection between a virtual vehicle in a gaming system and the real vehicle.

F0. A real vehicle node apparatus in a blockchain network comprising: a sensor configured to acquire driving data of a real vehicle; and the apparatus of any one of paragraphs D0 to D10 and E0.

G0. A blockchain network comprising the real vehicle node apparatus of paragraph F0.

H0. A non-transitory computer-readable storage medium having stored thereon a program that, when being executed by a computer, causes the computer to execute the method of any one of paragraphs C0 to C11.

10. An apparatus for establishing an association between a virtual vehicle and a real vehicle in a blockchain network, the apparatus comprising a memory and a processor, the memory being in communication coupling with the processor, the memory having stored therein a program that, when being executed by the processor, causes the processor to execute the method of any one of paragraphs C0 to C11.

J0. A computer program product comprising a computer program that, when being executed by a processor, implements the method of any one of paragraphs C0 to C11.

In all the examples shown and discussed herein, any specific value should be interpreted as exemplary only and not as a limitation. Thus, other examples of exemplary embodiment can have different values.

As used herein, the term "exemplary" means "serving as an example, instance, or illustration" and not as a "model" to be precisely reproduced. Any implementation illustrated herein is not necessarily construed as preferred or advantageous over other implementations. Furthermore, the present disclosure is not limited by any expressed or implied theory given in the above technical field, background, summary or description of the embodiments.

It should be understood that the term "comprise/include", when used herein, is intended to indicate the presence of the indicated features, entirety, steps, operations, units and/or components, but does not preclude the presence or addition of one or more other features, entirety, steps, operations, units and/or components and/or combinations thereof.

As used herein, the term "and/or" includes any and all combinations of one or more of the associated listed items. Terms used herein are for the purpose of describing specific embodiments only and are not intended to limit the present disclosure. As used herein, the singular forms "a", "an" and "the" are also intended to include the plural forms unless the context clearly dictates otherwise.

Those skilled in the art will appreciate that the boundaries between the above operations are illustrative only. A plurality of operations may be combined into a single operation, the single operation may be distributed among additional operations, and the operations may be performed at least partially overlapping in time. Further, alternative embodiments may include multiple instances of specific operations and the order of operations may be changed in various other embodiments. However, other modifications, changes and substitutions are also possible. Therefore, the description and the accompanying drawings should be regarded as illustrative and not limiting.

While some specific embodiments of the present disclosure have been described in detail by way of examples, it should be understood by those skilled in the art that the above examples are for illustration only and are not intended to limit the scope of the present disclosure. Embodiments disclosed herein may be arbitrarily combined without departing from the scope of the present disclosure. Those skilled in the art will also appreciate that various modifications may be made to the embodiments without departing from the scope of the present disclosure. The scope of the present disclosure is defined by the appended claims.

## Claims

1. A method for establishing an association between a virtual vehicle and a real vehicle in a blockchain network, performed by a blockchain network, the method comprising:
receiving a code of the virtual vehicle in the blockchain network and an identification code of the real vehicle;
verifying whether the code of the virtual vehicle is associated with the identification code of the real vehicle by calling a smart contract;
in response to that the association is successful, recording the association in an association table;
receiving driving data uplinked to the blockchain network by the real vehicle; and
determining a value reward based on a blockchain network gain of the associated virtual vehicle and the driving data of the real vehicle.

2. The method of claim 1, wherein determining a value reward based on a blockchain network gain of the associated virtual vehicle and the driving data of the real vehicle comprising:
calculating parameters related to the value reword based on the driving data preferably the parameters related to the value reword based on the driving data is a probability that the real vehicle obtains the value reward.

3. The method of claim 1 or 2, wherein verifying whether the code of the virtual vehicle is associated with the identification code of the real vehicle by calling a smart contract comprising:
judging whether an association relationship exists in an associate table ;
in response to the existence of the association relationship, determining the blockchain network gain of the associated virtual vehicle by combining the probability that the real vehicle obtains the value reward and a probability that the virtual vehicle obtains the blockchain network gain
preferably the method further comprising:
receiving a gaming system gain from a gaming system associated with the real vehicle;
calling the smart contract to acquire information associated with the real vehicle
in the case that the association of the real vehicle with the virtual vehicle exists, acquiring a gaming system gain of the associated real vehicle and causing a gaming system gain of the associated real vehicle to be applied to a capability of the virtual vehicle in the gaming system.

4. The method of any one of claims 1 to 3, wherein the virtual vehicle is a game vehicle to in a gaming system and configured to obtain props in the game; and
the props correspond to non-fungible tokens in the blockchain network.

5. The method of claim 4, wherein the props are combinable with each other and with a virtual vehicle; and
a mutual combination of the props and a combination of the props with the virtual vehicle generate non-fungible tokens corresponding to the mutual combination of the props and non-fungible tokens corresponding to the combination of the props with the virtual vehicle in the blockchain network.

6. The method of claim 5, wherein the props correspond to the gaming system gain in the gaming system; and
after the prop is combined with the virtual vehicle, applying the gaming system gain of the props to a capability of the virtual vehicle in the gaming system.

7. The method of any of claim 5 or 6, wherein the props correspond to the blockchain network gain in the blockchain network; and
after the prop is combined with the virtual vehicle, applying the blockchain network gain of the props to a capability of the virtual vehicle to enhance the blockchain network gain of the virtual vehicle.

8. The method of any of claims 5 to 7, wherein a combination relationship between the props and the virtual vehicle is recorded in the blockchain in a form of Hash List.

9. The method of any of claims 1 to 8, wherein the association between the virtual vehicle and the real vehicle is recorded in the blockchain in a form of Merkle Tree.

10. The method of any of claims 5 to 9, wherein account information associated with the non-fungible tokens is saved in the non-fungible tokens; and
the non-fungible tokens are tradable, and proceeds from transactions are distributed among interested parties based on the account information.

11. A method for establishing an association between a virtual vehicle and a real vehicle in a blockchain network, performed by a client end, the method comprising:
selecting a virtual vehicle, wherein the virtual vehicle corresponds to a non-fungible token in the blockchain network;
selecting a real vehicle to be associated with the virtual vehicle;
associating a code of the virtual vehicle in the blockchain network with an identification code of the real vehicle by calling a smart contract; and
receiving feedback on whether the association is successful from the blockchain network;
in response to a feedback that the association is successful, uplinking driving data of the real vehicle to the blockchain network to participate in a calculation on a value reward in the blockchain as relevant parameter; and
acquiring the value reward issued by the blockchain.

12. The method of claim 11, wherein the feedback on whether the association is successful is based on a verification performed in the blockchain network; and
the association in an association table in the blockchain network the blockchain network is recorded in the blockchain in response to that the verification on the association is successful.

13. The method of any of claim 11 or 12 , further comprising uplinking driving data of the real vehicle to the blockchain network so that the driving data of the real vehicle is available for acquiring a corresponding value reward in the blockchain network.

14. The method of any of claims 11 to 13, wherein the virtual vehicle is a game vehicle to in a gaming system and configured to obtain props in the game; and
the props correspond to non-fungible tokens in the blockchain network.

15. A blockchain network for establishing an association between a virtual vehicle and a real vehicle in a blockchain network, the blockchain network comprising:
at least one processor, and
at least one memory configured to store instructions executable by the at least one processor;
wherein the at least one processor, when executing the instructions, is caused to perform any of the method according to claims 1 to 10.
